# EUROPÄISCHE PATENTSCHRIFT

(11) **EP 2 498 918 B1**
(45) Veröffentlichungstag und Bekanntmachung des Hinweises auf die Patenterteilung: **26.09.2018**
(21) Anmeldenummer: 10781613.4
(22) Anmeldetag: 11.11.2010
(51) Int. Cl.: C08G 18/08, B05D 1/32, C09D 7/00, C08G 18/80, C08G 18/28, B05B 15/55, B05B 14/46, C09D 175/00

(54) **VERWENDUNG UND VERFAHREN ZUR VERMEIDUNG VON ABLAGERUNGEN IN BESCHICHTUNGSANLAGEN**
USE AND METHOD FOR PREVENTING DEPOSITS IN COATING INSTALLATIONS
UTILISATION ET PROCÉDÉ POUR ÉVITER DES DÉPÔTS DANS DES INSTALLATIONS DE REVÊTEMENT

(30) Priorität: 11.11.2009 DE 102009052655
(43) Veröffentlichungstag der Anmeldung: 19.09.2012
(73) Patentinhaber: Dürr Systems AG, 74321 Bietigheim-Bissingen (DE)
(72) Erfinder: FRITZ, Hans-Georg, 73760 Ostfildern (DE); KLEINER, Marcus, 74354 Besigheim (DE); ZABEL, Michael, 71364 Winnenden (DE); WÖHR, Benjamin, 74363 Eibensbach (DE); SOMMER, Georg, M., 71642 Ludwigsburg (DE)
(74) Vertreter: Kotitschke, Bernd
(86) Internationale Anmeldenummer: PCT/EP2010/006882
(87) Internationale Veröffentlichungsnummer: WO 2011/057787

(56) Entgegenhaltungen:
- EP-A1- 0 556 670
- EP-A1- 0 569 756
- EP-A1- 1 312 419
- WO-A1-2007/039276
- DD-A1- 236 023
- DE-A1- 19 835 333
- GB-A- 2 119 280
- JP-A- 5 186 564
- US-A- 3 488 004
- US-A- 4 794 154

## Beschreibung

Die Erfindung betrifft eine Verwendung und ein Verfahren gemäß den unabhängigen Ansprüchen. Die Erfindung findet insbesondere Anwendung in einer Beschichtungsanlage, vorzugsweise in einer Lackieranlage für Kraftfahrzeugkarosseriebauteile, und/oder bei Entsorgungsmitteln aus Reinigungs- und/oder Spülprozessen eines Applikationsgeräts, umfassend z.B. einen Zerstäuber, einen Farbwechsler, eine Rückführleitung oder andere Komponenten der Applikationstechnik. Die Erfindung findet bevorzugt Anwendung bei Zwei- und/oder Mehr-Komponenten-Lacksystemen.

Applikationsgeräte, wie z.B. Zerstäuber, Farbwechsler, etc. zum Beschichten von Kraftfahrzeugkarosseriebauteilen müssen in regelmäßigen Abständen gereinigt bzw. gespült werden. Ein Reinigen bzw. Spülen kann erforderlich sein, um ein Ablagern von Beschichtungsmittel, z.B. von Lack, an oder in dem Applikationsgerät zu verhindern. Ferner kann ein Reinigen bzw. Spülen für einen Farbwechsel erforderlich sein, um zu verhindern, dass Lackreste einer falschen Farbe den zu applizierenden Lack verunreinigen, was zu einem Qualitätsverlust des zu beschichtenden Bauteils bis hin zu dessen Unbrauchbarkeit führen kann.

Üblicherweise entsteht beim Lackierprozess sogenannter Overspray. Als Overspray bezeichnet man den Beschichtungsmittelanteil, der nicht auf das zu beschichtende Bauteil gelangt und üblicherweise in einer Nass- oder Trockenabscheidung abgeschieden wird. Bei der Nassauswaschung erfolgt die Abscheidung üblicherweise mit Hilfe von Wasser, wohingegen bei der Trockenauswaschung die Abscheidung üblicherweise mit Hilfe von z.B. Steinmehl (Kalziumkarbonat) erfolgt.

In Beschichtungsanlagen mit Nassauswaschung wird zu entsorgender Ein-Komponenten-Lack z.B. beim Andrücken, beim Farbwechsel oder während Spül- bzw. Reinigungsprozessen entweder in Aufnahmebehälter eingebracht, aus denen er dann über Leitungen abgeführt wird, oder direkt in die Auswaschung gesprüht. Bei Zwei-Komponenten-Lacken hingegen, d.h. Lacke, die eine Lack- und eine Härter-Komponente aufweisen und üblicherweise kurz vor dem Applizieren in vorgegebenen Mengenverhältnissen gemischt werden und anschließend meist rasch aushärten, kommt im Wesentlichen nur ein direktes Einbringen in die Auswaschung in Betracht. Bei der Entsorgung von Zwei-Komponenten-Lacken besteht insbesondere die Gefahr, dass sich vor- und/oder ausreagierter Lack an Teilen des Entsorgungssystems, z.B. an den Aufnahmebehältern, den Abführleitungen, etc. ablagert. Ablagerungen in Leitungen können zu Querschnittsverengungen und im Extremfall zu vollständigen Leitungsverstopfungen führen.

Bei der Trockenauswaschung kann das Einsprühen größerer Lackmengen an im Wesentlichen immer derselben Stelle, wie z.B. der Spülposition eines Lackierroboters, zu einer Beeinträchtigung des Abscheidesystems führen, da an den Kabineninnenflächen ablaufender Lack nicht vom sogenannten Precoatmaterial (z.B. Kalziumkarbonat) aufgenommen werden kann. Das Trockenabscheidesystem ist darauf ausgelegt, Lackpartikel oder sehr kleine Lacktröpfchen aufzunehmen. Dazu wird das Precoatmaterial ständig fluidisiert und taktweise aufgewirbelt. Der Boden der Trichter, in denen das Precoatmaterial fluidisiert, besteht aus einem luftdurchlässigen Material, meist aus gesintertem Polyethylen. Größere Mengen flüssigen Lacks können von dem Wirbelbett nicht sofort aufgenommen, d.h. entklebt werden, so dass sie auf den Fluidboden gelangen und dessen Poren verkleben. Eine genauere Beschreibung eines Trockenabscheidesystems ist z.B. in der WO 2009/026995 A1 offenbart.

Auch mögliche Pfützenbildungen auf horizontalen Flächen, die bei bestimmtem Ausmaß überlaufen, sind nachteilhaft.

Ferner ist problematisch, dass unzerstäubtes Material z.B. bei Spülvorgängen oder bei der Überprüfung der Ausflussmenge (Auslitern) in die Auswaschung gelangen kann.

Der Overspray wird, wenn auch nur zu einem geringeren Teil, im Wirbelbett gebunden. Der größere Teil an den Filterrohren. Aus dem fluidisierenden Wirbelbett wird z.B. das Steinmehl mit Druckluft zyklisch im Bereich des Filterkastens in die Luft gebracht, von den Filterrohren angesaugt und dann dort das Overspray abgeschieden.

In jedem Fall wird aber insbesondere der Fluidboden durch größere Lackmengen, die in das Wirbelbett fließen (anstatt als Overspray-Partikel eingetragen zu werden) geschädigt, nicht aber die Filter.

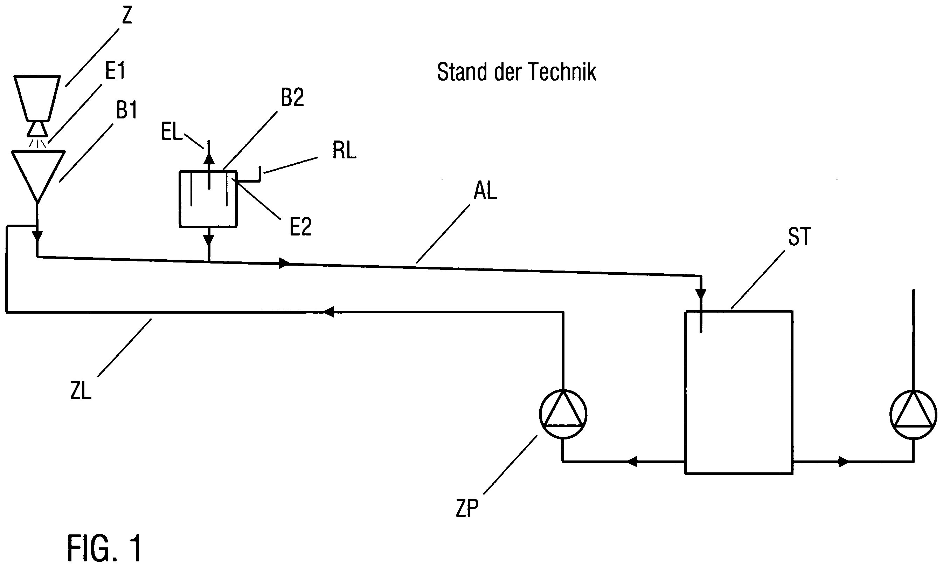

Fig. 1 zeigt eine schematische Darstellung eines Entsorgungssystems des Stands der Technik. Das Entsorgungssystem wird eingesetzt, um die Nassauswaschung nicht unangemessen mit Lack und Lösemitteln anzureichern. Das Entsorgungssystem weist zwei Behälter B1 und B2 auf. Das Entsorgungsmittel E1 aus den Spül- und/oder Reinigungsprozessen des Zerstäubers Z wird in einen offenen, meist trichterförmigen ersten Behälter B1 eingebracht, wohingegen das Entsorgungsmittel E2 aus den Spül- und/oder Reinigungsprozessen des Farbwechslers bzw. der Rückführleitung RL in einen geschlossenen zweiten Behälter B2 mit einer Entlüftung EL eingebracht wird. Beide Behälter B1 und B2 sind an eine Abführleitung AL angeschlossen, die üblicherweise parallel zu einer Lackierstraße angeordnet und mit einem Gefälle von ca. 1-2% verlegt ist. Im Regelfall ist die Abführleitung AL mit bis zu ungefähr 15-20% mit Entsorgungsmittel E1, E2 gefüllt. Das Entsorgungsmittel E1, E2 wird von der Abführleitung AL zu einem Sammeltank ST befördert. Damit sich das Entsorgungsmittel E1, E2, insbesondere dessen Feststoffe, nicht zu schnell in der Abführleitung AL ablagern, wird das Entsorgungsmittel E1, E2 aus dem Sammeltank ST über eine Zirkulationsleitung ZL mit Hilfe einer Zirkulationspumpe ZP kontinuierlich zum Anfangspunkt der Abführleitung AL zurückbefördert. Durch die Zirkulation zumindest eines Teils des bereits aus den Behältern B1, B2 abgeführten und in dem Sammeltank ST zwischengelagerten Entsorgungsmittels E1, E2 erhöht sich der Volumenstrom unabhängig vom anfallenden Entsorgungsmittel E1, E2.

Wird vorstehend beschriebenes System mit einem Zwei- oder Mehr-Komponenten-Lack beaufschlagt, besteht insbesondere die Gefahr, dass sich der Zwei- oder Mehr-Komponenten-Lack nachteilig an den Systemkomponenten, insbesondere an oder in den Behältern, in den Leitungen oder anderen mit dem Zwei- oder Mehr-Komponenten-Lack in Kontakt kommenden Abschnitten ablagert bzw. festsetzt.

Zwar könnten beispielsweise die von abgelagertem Zwei- oder Mehr-Komponenten-Lack beeinträchtigten Leitungen in regelmäßigen Abständen gereinigt oder ausgetauscht werden. Der damit verbundene erhebliche Personal- und Kostenaufwand wäre jedoch nachteilig. Darüber hinaus besteht die Gefahr, dass wenn die Reinigung oder der Austausch zu spät durchgeführt werden, Leitungen derart verstopfen, dass es zu einem Betriebsausfall oder Beschädigungen bestimmter Systemkomponenten kommt, was einen weiteren wesentlichen Nachteil darstellt.

Ferner ist nachteilig, dass sich der Zwei- oder Mehr-Komponenten-Lack an oder in anderen Beschichtungsanlagenbauteilen, wie z.B. dem Applikationsgerät, dem Applikationsroboter, etc., ablagern bzw. festsetzen kann.

Darüber hinaus ist der Bedarf an zwei getrennten Behältern für Entsorgungsmittel aus den Spül- und/oder Reinigungsprozessen eines Zerstäubers und Entsorgungsmittel aus den Spül- und/oder Reinigungsprozessen eines Farbwechslers bzw. einer Rückführleitung nachteilig.

EP 0 569 756 A1 offenbart ein Verfahren zur Wiederverwertung des beim Verspritzen von lösungsmittelhaltigen Polyurethanlacken anfallenden Oversprays durch Auswaschen des Oversprays aus der Abluft der Beschichtungsanlage mittels einer wäßrigen Phase, die gegenüber Isocyanatgruppen hochreaktive Verbindungen gelöst oder dispergiert enthält, Isolierung des so modifizierten Oversprays unter Einsatz von Koagulierungsmitteln als Lackschlamm, Vermischen des Lackschlamms mit Lösungsmittel, Befreiung der hierbei anfallenden organischen Phase von der gegebenenfalls vorliegenden wäßrigen Phase und/oder von gegebenenfalls vorliegenden, unlöslichen Bestandteilen und Wiederverwendung der in der organischen Phase gelösten organischen Bestandteile. US 3 488 004 A offenbart eine druckluftlose Zweikomponentenschaumsprühpistole. Zwei unter Hochdruck stehende Ströme zweier Flüssigkeitskomponenten fließen hierbei durch Steuerventile in dem Pistolenkörper in zwei in dem Mischkopf befindliche Kammern. Die beiden Ströme werden turbulent vermischt, während sie von den Kammern zu einer Sprühdüse fließen. DE 42 11 465 C2, WO 2008/077944 A1 und US 4 017 438 A offenbaren weiteren technologischen Hintergrund betreffend die Erfindung.

US-A-4794154 und JP-A-05 186564 offenbaren Zwei-Komponenten Polyurethanlacke die blockierten Komponenten enthalten. In Anbetracht obiger Ausführungen wird es Fachleuten anhand dieser Offenbarung ersichtlich, dass ein Bedarf an der Lösung oben beschriebener Probleme besteht. Diese Erfindung bezieht sich auf diesen Bedarf des Standes der Technik sowie auf andere Bedürfnisse, die Fachleuten anhand dieser Offenbarung ersichtlich werden.

Insbesondere besteht ein Bedarf an der Lösung des Problems der Ablagerungen von Entsorgungsmittel und/oder von Zwei- oder Mehr-Komponenten-Lack an mit dem Entsorgungsmittel und/ oder dem Zwei- oder Mehr-Komponenten-Lack in Kontakt kommenden Teilen. Unerwünschte Ablagerungen können insbesondere auftreten an oder in einer Aufnahmevorrichtung für das Entsorgungsmittel, an oder in Beschichtungsanlagenbauteilen (z.B. Bauteile einer Beschichtungsanlage für vorzugsweise Kraftfahrzeugkarosseriebauteile), an oder in Applikationsgeräten (z.B. umfassend Zerstäuber, Farbwechsler, Mischer, Ventile, Glockenteller, etc.) und an oder in Komponenten des Entsorgungssystems (z.B. Pumpen, Ventile, Leitungen, etc.). Das Problem der Ablagerungen besteht insbesondere bei der Verwendung von Zwei- oder Mehr-Komponenten-Lacken, d.h. Lacke, die zumindest eine Lack- und zumindest eine Härter-Komponente aufweisen und üblicherweise kurz vor dem Applizieren in vorgegebenen Mengenverhältnissen gemischt werden und anschließend meist rasch aushärten.

Die sich aus vorstehend Genanntem ergebenden Aufgaben können im Wesentlichen mit den Merkmalen der unabhängigen Ansprüche gelöst werden.

Die Erfindung umfasst die allgemeine technische Lehre, ein Ablagern bzw. Festsetzen eines Zwei- oder Mehr-Komponenten-Lacks an oder in Bauteilen einer Beschichtungsanlage, vorzugsweise einer Lackieranlage für Kraftfahrzeugkarosseriebauteile, zumindest zu verzögern, vorzugsweise im Wesentlichen zu verhindern.

Als Blockierungsmittel kommen alle monofunktionellen Moleküle in Betracht, die mit zumindest einer Komponente eines Zwei- oder Mehr-Komponenten-Lacksystems reagieren können. Vorzugsweise umfasst das Blockierungsmittel mindestens ein Amin, mindestens einen Alkohol, bevorzugt mindestens einen niederen Alkohol, Ethanol, Propanol und/oder mindestens eines dessen Isomere, und/oder Butanol und/oder mindestens eines dessen Isomere. Das Blockierungsmittel kann auch eine reaktive Substanz, wie mindestens einen Reaktionsverzögerer, vorzugsweise mindestens ein organisches Säurechlorid, umfassen. Bei der Härter-Komponente des Zwei- oder Mehr-Komponenten-Lacksystems kann es sich z.B. um Isocyanat handeln. Bei dem Zwei- oder Mehr-Komponenten-Lacksystem kann es sich um ein herkömmliches Zwei- oder Mehr-Komponenten-Lacksystem handeln, das üblicherweise zur Beschichtung von Kraftfahrzeugkarosseriebauteilen eingesetzt wird.

Die dabei verwendete Zusammensetzung kann ferner ein Spül-, Reinigungs- und/ oder Lösemittel umfassen. Bevorzugt ist das Blockierungsmittel mit diesen Mitteln mischbar. Ansonsten kann die Zusammensetzung einen Lösungsvermittler zur Vermischung des Blockierungsmittels mit dem Spül-, Reinigungs- und/oder Lösemittel umfassen. Bei den Spül-, Reinigungs- und/oder Lösemitteln kann es sich um übliche Lack-Spül-, Lack-Reinigungs- und/oder Lack-Lösemittel handeln.

Es ist möglich, das Blockierungsmittel in Form monofunktioneller Moleküle mit einer Dosierhöhe von vorzugsweise 10-50% dem Spül-, Reinigungs- und/ oder Lösemittel beizumischen. Ferner ist es möglich, das Blockierungsmittel in Form der reaktiven Substanz mit einer Dosierhöhe von vorzugsweise 1-5% dem Spül-, Reinigungs- und/ oder Lösemittel beizumischen.

Das Blockierungsmittel ist insbesondere vorgesehen, um mit einer Härter-Komponente des Zwei- oder Mehr-Komponenten-Lacksystems zu reagieren.

Bei einer bevorzugten Verwendung beschichtet und/oder befüllt und/oder durchströmt das Blockierungsmittel ein Beschichtungsanlagenbauteil, insbesondere ein Bauteil einer Lackieranlage für Kraftfahrzeugkarosseriebauteile, einen Applikationsroboter, ein Applikationsgerät, einen Zerstäuber, einen Glockenteller, einen Mischer zum Mischen des Zwei- oder Mehr-Komponenten-Lacksystems, ein Reinigungsgerät zum Reinigen eines Applikationsgeräts, einen Farbwechsler, eine Rückführleitung, eine Aufnahmevorrichtung für Entsorgungsmittel, eine Abführleitung zum Abführen des Entsorgungsmittels von der Aufnahmevorrichtung, eine Zirkulationsleitung zum Rückführen von bereits aus der Aufnahmevorrichtung abgeführtem Entsorgungsmittel zu der Aufnahmevorrichtung, und/oder andere Teile einer Beschichtungsanlage, die der Gefahr ausgesetzt sind, mit Beschichtungsmittel in Form von z.B. Zwei- oder Mehr-Komponenten-Lack in Kontakt zu kommen, der sich unerwünscht ablagern bzw. festsetzen kann.

Ein Beschichtungsanlagenbauteil, insbesondere Bauteil einer Beschichtungsanlage für Kraftfahrzeugkarosseriebauteile, kann ein Blockierungsmittel aufweisen, um ein Aushärten eines Zwei- oder Mehr-Komponenten-Lacksystems zumindest zu verzögern, vorzugsweise im Wesentlichen zu verhindern, was ein Ablagern an oder in dem Beschichtungsanlagenbauteil zumindest verzögert, vorzugsweise im Wesentlichen verhindert.

Obwohl das Beschichtungsanlagenbauteil mit Zwei- oder Mehr-Komponenten-Lack unerwünscht in Kontakt kommt, kann die Gefahr der Ablagerung bzw. Festsetzung durch das Blockierungsmittel bzw. die Zusammensetzung, umfassend den Zwei- oder Mehr-Komponenten-Lack und das Blockierungsmittel, vermindert oder verhindert werden.

Insbesondere kann das Beschichtungsanlagenbauteil zumindest teilweise durch das Blockierungsmittel beschichtet und/oder befüllt und/oder durchströmt sein. Das Blockierungsmittel wird vorzugsweise an den Abschnitten des Beschichtungsanlagenbauteils aufgetragen, die der Gefahr ausgesetzt sind, mit Entsorgungsmittel, insbesondere einem Zwei- oder Mehr-Komponenten-Lack, in Kontakt zu kommen.

Die Verzögerung bzw. Verhinderung der Ablagerung von Entsorgungsmittel, insbesondere von Zwei- oder Mehr-Komponenten-Lacken, führt zu einem verringerten Wartungs- bzw. Reinigungsaufwand der Teile einer Beschichtungsanlage, die mit dem Entsorgungsmittel in Kontakt kommen (z.B. das Applikationsgerät, der Zerstäuber, der Farbwechsler, die Rückführleitung, die Ringleitung, etc.). Auch kann der Wartungsaufwand der Rückführung oder Ringleitung z.B. beim Andrücken, Farbwechsel oder Spülen vermindert werden.

Ein weiterer Vorteil der Erfindung ist die Vermeidung von zusätzlichem Chemikalienverbrauch und erhöhtem Lackschlamm-Anfall bei der Verarbeitung von Zwei- oder Mehr-Komponenten-Lacken in Lackierkabinen mit Nassauswaschung.

Insbesondere die oben beschriebenen bevorzugten Ausführungsformen und möglichen Ausgestaltungen sind beliebig miteinander kombinierbar.

Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren. Es zeigen:
- Fig. 1: eine schematische Darstellung eines Entsorgungs-systems des Stands der Technik;
- Fig. 2: eine schematische Seitenschnittansicht einer mit der Erfindung vorteilhaft kombinierbaren Aufnahmevorrichtung für Entsorgungsmittel;
- Fig. 3: eine schematische Seitenschnittansicht einer mit der Erfindung vorteilhaft kombinierbaren Aufnahmevorrichtung für Entsorgungsmittel ;
- Fig. 4: eine schematische Draufsicht auf die Aufnahmevorrichtung gemäß Fig. 3;
- Fig. 5A-5D: schematische Darstellungen unterschiedlicher, mit der Erfindung vorteilhaft kombinierbaren Möglichkeiten, Beaufschlagungsmittel in eine Aufnahmevorrichtung für Entsorgungsmittel einzubringen;
- Fig. 6: eine schematische Darstellung eines mit der Erfindung vorteilhaft kombinierbaren Entsorgungssystems gemäß einem Ausführungsbeispiel der Erfindung;
- Fig. 7A-7C: schematische Darstellungen einer Zusammensetzung und eines Blockierungsmittels gemäß einem Ausführungsbeispiel der Erfindung.

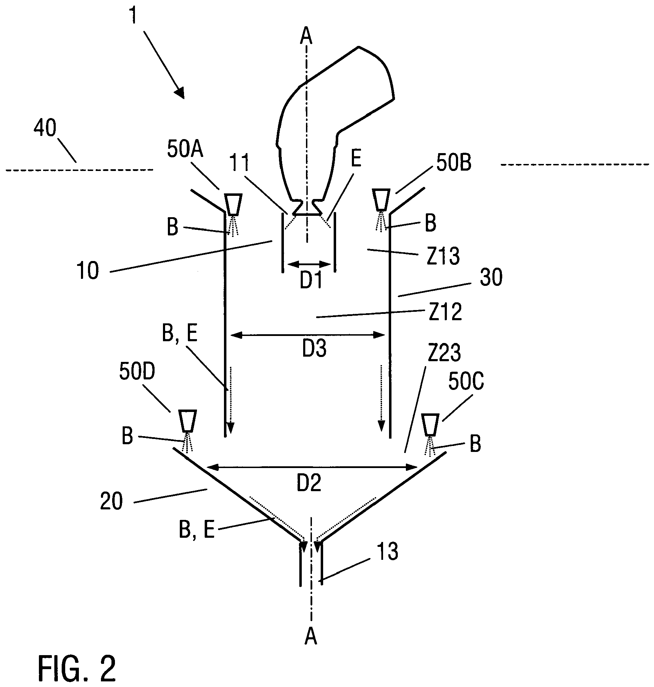

Figur 2 zeigt eine schematische Darstellung einer Aufnahmevorrichtung 1 für Entsorgungsmittel E. Die Aufnahmevorrichtung 1 umfasst einen ersten Körper 10, einen zweiten Körper 20 und einen dritten Körper 30. Der erste Körper 10 und der dritte Körper 30 sind im Wesentlichen zylinderförmig ausgebildet. Der zweite Körper 20 ist im Wesentlichen trichterförmig ausgebildet. Der erste Körper 10 ist vorzugsweise an dem oberen Endabschnitt des dritten Körpers 30 demontierbar befestigt. Es ist auch möglich, den ersten Körper 10 und den dritten Körper 30 trichterförmig auszubilden.

Der dritte Körper 30 weist einen Durchmesser D3 auf, der größer ist als der Durchmesser D1 des ersten Körpers 10. Der zweite Körper 20 weist einen Durchmesser D2 auf, der zumindest abschnittsweise größer ist als der Durchmesser D1 des ersten Körpers 10 und/oder der Durchmesser D3 des dritten Körpers 30. Aufgrund der trichterförmigen Ausbildung weist der zweite Körper 20 auch Durchmesser auf, die kleiner sind als der Durchmesser D1 des ersten Körpers 10 und/oder der Durchmesser D3 des dritten Körpers 30. Der erste Körper 10, der zweite Körper 20 und der dritte Körper 30 sind um eine Längsachse A-A und im Wesentlichen koaxial zueinander angeordnet.

Der dritte Körper 30 umgibt zumindest teilweise den ersten Körper 10, um einen Zwischenraum Z13 zwischen dem dritten Körper 30 und dem ersten Körper 10 zu bilden. Der zweite Körper 20 umgibt zumindest teilweise den dritten Körper 30, um einen Zwischenraum Z23 zwischen dem zweiten Körper 20 und dem dritten Körper 30 zu bilden. Der Zwischenraum Z23 ist bereitgestellt, um für eine ausreichende Entlüftung der über die Einlassöffnung 11 zusammen mit dem Entsorgungsmittel E eingebrachten Lenkluft (zur Verhinderung einer Verschmutzung z.B. des Zerstäubers) zu sorgen. Dabei ist der Zwischenraum Z23 vorzugsweise bemessen, um ausreichend für die Entlüftung (kein Staudruck) zu sein, darf aber nicht zu groß sein, um möglichst 100% des Entsorgungs- und Beaufschlagungsmittels E und B auffangen zu können. Idealerweise hat der Zwischenraum Z23 eine Breite von ungefähr 200 mm. Ferner sind der erste Körper 10 und der zweite Körper 20 voneinander beabstandet, um einen Zwischenraum Z12 zwischen dem ersten Körper 10 und dem zweiten Körper 20 zu bilden.

Somit ist vorzugsweise der erste Körper 10 ein Innenrohr, der zweite Körper 20 ein Außenrohr und der dritte Körper 30 ein intermediäres Rohr, positioniert zwischen dem Außenrohr 20 und dem Innenrohr 10.

Beispielsweise können sich Arme (nicht gezeigt) von dem ersten Körper 10 zu dem dritten Körper 30 erstrecken, um den ersten Körper 10 an dem dritten Körper 30 vorzugsweise demontierbar zu befestigen.

Am oberen Endabschnitt des ersten Körpers 10 ist eine Einlassöffnung 11 vorgesehen, in die das zu entsorgende Mittel E einzubringen ist. Im vorliegenden Ausführungsbeispiel wird ein Applikationsgerät (z.B. ein Zerstäuber mit Glockenteller) von einem Roboterarm an der Einlassöffnung 11 bzw. dem ersten Körper 10 positioniert, um das Entsorgungsmittel E in die Einlassöffnung 11 bzw. den ersten Körper 10 einzuspritzen.

Das Entsorgungsmittel E, das meist Lack, Lösemittel und Lufteinschlüsse umfasst, wird in zerstäubter Form in den ersten Körper 10 eingebracht. Die Luft kann dabei nach oben und/oder unten entweichen. Das Entsorgungsmittel E wird an der Innenfläche des dritten Körpers 30 in Form von (größeren) Tröpfchen abgeschieden und nach unten zum zweiten Körper 20 abgeführt.

Am unteren Endabschnitt des zweiten Körpers 20 ist eine Auslassöffnung 13 vorgesehen, über die das Entsorgungsmittel E aus der Aufnahmevorrichtung 1 abgeführt werden kann.

Das Entsorgungsmittel E gelangt also zumindest teilweise mittels Schwerkraft von dem ersten Körper 10 über den dritten Körper 30 zu dem zweiten Körper 20.

Ferner umfasst die Aufnahmevorrichtung 1 zumindest eine Beaufschlagungseinrichtung 50, vorzugsweise eine Vielzahl von Beaufschlagungseinrichtungen 50A, 50B, 50C und 50D, um die Aufnahmevorrichtung 1 mit einem Beaufschlagungsmittel B zu beaufschlagen, was ein Ablagern von Entsorgungsmittel E an oder in der Aufnahmevorrichtung 1 zumindest verzögert, vorzugsweise im Wesentlichen verhindert.

Die Beaufschlagungseinrichtungen 50A-50D sind so konfiguriert und angeordnet, dass insbesondere die Abschnitte des zweiten Körpers 20 und des dritten Körpers 30, die in Kontakt kommen mit Entsorgungsmittel E, das über die Einlassöffnung 11 eingebracht wird, mit dem Beaufschlagungsmittel B beaufschlagt werden.

Die Beaufschlagungseinrichtungen 50A und 50B sind am oberen Endabschnitt des dritten Körpers 30 positioniert, um insbesondere die Innenfläche des dritten Körpers 30, die in Kontakt kommt mit Entsorgungsmittel E aus dem ersten Körper 10, mit Beaufschlagungsmittel B zu beaufschlagen.

Die Beaufschlagungseinrichtungen 50C und 50D sind am oberen Endabschnitt des zweiten Körpers 20 positioniert, um insbesondere die Innenfläche des zweiten Körpers 20, die in Kontakt kommt mit Entsorgungsmittel E aus dem ersten Körper 10, mit Beaufschlagungsmittel B zu beaufschlagen.

Die Beaufschlagungseinrichtungen 50A und 50B können beispielsweise an eine Spül-, Reinigungs- und/oder Lösemittelzufuhr (nicht dargestellt) gekoppelt werden, um die Aufnahmevorrichtung 1 mit Beaufschlagungsmittel B in Form von reinem, unverschmutztem Spül-, Reinigungs- und/oder Lösemittel zu beaufschlagen.

Die Beaufschlagungseinrichtungen 50C und 50D können beispielsweise an eine Zirkulationsleitung eines Entsorgungssystems (nicht dargestellt in Fig. 1) gekoppelt werden. Die Zirkulationsleitung ist vorgesehen, um zumindest einen Teil von bereits aus der Aufnahmevorrichtung 1 abgeführtem, meist in einem Sammeltank (nicht dargestellt in Fig. 1) zwischengelagertem Entsorgungsmittel E wieder in die Aufnahmevorrichtung 1 zurückzuführen. Das von der Zirkulationsleitung zugeführte Beaufschlagungsmittel B kann zusätzlich zu dem bereits aus der Aufnahmevorrichtung 1 abgeführten Entsorgungsmittel E weiteres Spül-, Reinigungs- und/oder Lösemittel, ein Blockierungsmittel, das ein Aushärten des Entsorgungsmittels E zumindest verzögert, insbesondere, wenn das Entsorgungsmittel E einen Zwei- oder Mehr-Komponenten-Lack aufweist, oder andere Zusatzflüssigkeiten umfassen.

Ein Ablagern des über die Einlassöffnung 11 eingeführten Entsorgungsmittels E an oder in der Aufnahmevorrichtung 1, insbesondere den Innenflächen des zweiten Körpers 20 und des dritten Körpers 30, wird zumindest verzögert, vorzugsweise im Wesentlichen verhindert, da das über die Einlassöffnung 11 eingeführte Entsorgungsmittel E durch das Beaufschlagungsmittel B von den Innenflächen des zweiten Körpers 20 und des dritten Körpers 30 ("mechanisch") abgeführt wird. Ein Ablagern des über die Einlassöffnung 11 eingeführten Entsorgungsmittels E an oder in der Aufnahmevorrichtung 1, insbesondere den Innenflächen des zweiten Körpers 20 und des dritten Körpers 30, kann ferner zumindest verzögert, vorzugsweise im Wesentlichen verhindert werden, wenn das Beaufschlagungsmittel B ein Mittel umfasst, welches ein Ablagern bzw. Anhaften des Entsorgungsmittels E an oder in der Aufnahmevorrichtung 1 ("chemisch") verzögert, vorzugsweise im Wesentlichen verhindert.

Die Aufnahmevorrichtung 1 in Fig. 2 ist unter einem Gitterrost 40 und/oder unterhalb eines Gitterrost-Niveaus eines Entsorgungssystems, das in einer Beschichtungsanlage für Kraftfahrzeugkarosseriebauteile positioniert ist, und in Reichweite eines Lackierroboters angeordnet.

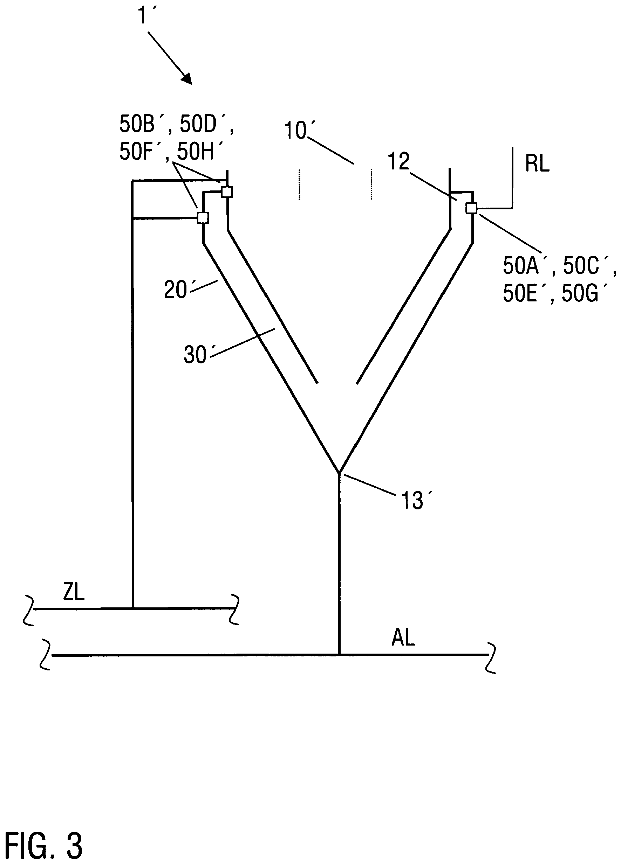

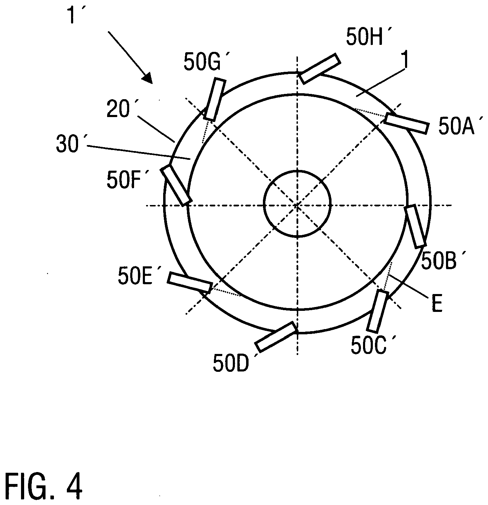

Die Figuren 3 und 4 zeigen eine Aufnahmevorrichtung für Entsorgungsmittel 1' gemäß einem zweiten Ausführungsbeispiel, wobei die Figur 3 eine schematische Schnittansicht und die Figur 4 eine schematische Draufsicht auf die Aufnahmevorrichtung 1' ist. Zum ersten Ausführungsbeispiel identische und/oder im Wesentlichen identische Teile haben die gleichen Bezugszeichen, jedoch zuzüglich versehen mit einem Apostroph, so dass insoweit auf die Beschreibung zum ersten Ausführungsbeispiel verwiesen wird, um Wiederholungen zu vermeiden.

Figur 3 zeigt einen zweiten Körper 20', einen dritten Körper 30', eine am zweiten Körper 20' vorgesehene Auslassöffnung 13', eine Vielzahl von Beaufschlagungseinrichtungen 50A', 50B', 50C', 50D', 50E', 50F', 50G' und 50H', eine Abführleitung AL, die zu einem Sammeltank (nicht dargestellt) führt, und eine Zirkulationsleitung ZL, die von dem Sammeltank zu der Aufnahmevorrichtung 1' führt. Ferner zeigt Figur 3 eine Einlassöffnung 12, die durch einen Zwischenraum zwischen dem zweiten Körper 20 und dem dritten Körper 30 gebildet wird, wobei der Zwischenraum an einem im Wesentlichen oberen Endabschnitt der Aufnahmevorrichtung 1' befindlich ist. Die Einlassöffnung 12 ist vorzugsweise eine Ringspaltöffnung.

Figur 4 zeigt den zweiten Körper 20', den dritten Körper 30', die Einlassöffnung 12 und die Vielzahl von Beaufschlagungseinrichtungen 50A', 50B', 50C', 50D', 50E', 50F', 50G' und 50H'.

Die Beaufschlagungseinrichtungen 50A', 50C', 50E' und 50G' sind an eine Rückführleitung RL gekoppelt, um mit Entsorgungsmittel E aus einem Applikationsgerät versorgt zu werden. Die Beaufschlagungseinrichtungen 50A', 50C', 50E' und 50G' sind vorgesehen, um das Entsorgungsmittel E in die Einlassöffnung 12 einzubringen.

Die Beaufschlagungseinrichtungen 50B', 50D', 50F'und 50H' sind an die Zirkulationsleitung ZL gekoppelt, um mit Beaufschlagungsmittel B versorgt zu werden. Die Beaufschlagungseinrichtungen 50B', 50D', 50F'und 50H' sind vorgesehen, um das Beaufschlagungsmittel B in die Einlassöffnung 12 einzubringen.

Vorzugsweise sind die Beaufschlagungseinrichtungen 50A', 50C', 50E' und 50G' konfiguriert und angeordnet, um das Entsorgungsmittel E so in die Aufnahmevorrichtung 1' einzubringen, dass eine Zyklonabscheidung des Entsorgungsmittels E erzielt wird. Um dies zu erreichen, wird das Entsorgungsmittel E im Wesentlichen in Umfangsrichtung in die Aufnahmevorrichtung 1' eingebracht, vorzugsweise im Wesentlichen tangential auf die Außenfläche des dritten Körpers 30, wie dies in Figur 4 gesehen werden kann. Der dritte Körper 30 wirkt als Prallblech für das Entsorgungsmittel E. Durch die Zyklonabscheidung werden beispielsweise die Flüssigkeitsanteile von den Luftanteilen getrennt. Die Flüssigkeitsanteile bzw. das verbleibende Entsorgungsmittel E wird über den zweiten Körper 20' und die Auslassöffnung 13' der Abführleitung AL zugeführt, wohingegen die Luftanteile vorzugsweise nach oben entweichen können.

Die Beaufschlagungseinrichtungen 50B', 50D', 50F' und 50H' sind vorgesehen, um die Aufnahmevorrichtung 1' mit dem Beaufschlagungsmittel B zu beaufschlagen, was ein Ablagern des Entsorgungsmittels E an oder in der Aufnahmevorrichtung 1', insbesondere der Außenfläche des dritten Körpers 30 und der Innenfläche des zweiten Körpers 20 zumindest verzögert, vorzugsweise im Wesentlichen verhindert.

Bei dem Beaufschlagungsmittel B aus der Zirkulationsleitung ZL handelt es sich beispielsweise um (z.B. durch Lackbestandteile) verunreinigtes Spül-, Reinigungs- und/oder Lösemittel. Es ist auch möglich, eine Beaufschlagungseinrichtung vorzusehen, die z.B. reines Lösemittel und/oder reines Blockierungsmittel in die Einlassöffnung 12 einführt, um ein Ablagern von Entsorgungsmittel E weiter zu verzögern, vorzugsweise im Wesentlichen zu verhindern.

Das erste und zweite Ausführungsbeispiel sind miteinander kombinierbar. Insbesondere ist es möglich, an der Aufnahmevorrichtung 1' des zweiten Ausführungsbeispiels einen ersten Körper gemäß dem ersten Ausführungsbeispiel bereitzustellen, was durch den in Figur 3 mit Strichlinien angedeuteten ersten Körper 10' angedeutet ist. Die Aufnahmevorrichtung dieses Ausführungsbeispiels weist dann zwei Einlassöffnungen auf, um Entsorgungsmittel einzubringen. Es ist möglich, die eine Einlassöffnung vorzusehen für Entsorgungsmittel von z.B. einem Zerstäuber und die andere Einlassöffnung vorzusehen für Entsorgungsmittel von z.B. einem Farbwechsler und/oder einer Rückführleitung. Somit ist diese Aufnahmevorrichtung in der Lage sowohl Entsorgungsmitteln aus den Spül- und/oder Reinigungsprozessen eines Zerstäubers als auch eines Farbwechslers und/oder Rückführleitungen aufzunehmen.

Es ist ferner möglich, den zweiten Körper 20 gemäß Figur 2 durch den Aufbau gemäß Figur 3 zu ersetzen. Insbesondere kann der zweite Körper 20' und der dritte Körper 30' aus dem zweiten Ausführungsbeispiel den zweiten Körper 20 aus dem ersten Ausführungsbeispiel ersetzen.

Ferner ist es möglich, den Aufbau gemäß Figur 3 zylindrisch auszubilden und mit dem Aufbau gemäß Figur 2 zu kombinieren, indem der dritte Körper 30 doppelwandig ausgeführt wird und hier die Medien (z.B. vom Farbwechsler, der Rückführleitung, etc.) zugeführt werden. Vorzugsweise kann in der doppelwandigen Ausführung eine Zyklonabscheidung erzielt werden.

Die vorstehend beschriebenen Aufnahmevorrichtungen können an eine elektrische Erdungsleitung angeschlossen oder anschließbar sein und mit einer Kontaktanordnung zum Erden des eingesetzten oder einzusetzenden Applikationsgeräts, wie z.B. ein elektrostatischer Zerstäuber mit Direkt-/ Außenaufladung, versehen sein, um eine Explosionsgefahr durch durch Spannungsüberschläge erzeugte Funken zu verhindern. Ferner können die vorstehend beschriebenen Aufnahmevorrichtungen an eine elektrische Hochspannungsleitung angeschlossen oder anschließbar sein, mit der sie auf das Hochspannungspotential eines Applikationsgeräts, wie z.B. ein elektrostatischer Zerstäuber mit Direkt-/ Außenaufladung, gelegt werden.

Eine Aufnahmevorrichtung für Entsorgungsmittel gemäß einem anderen, in den Figuren nicht gezeigten Ausführungsbeispiel umfasst ebenfalls zumindest eine Einlassöffnung, um das Entsorgungsmittel einzubringen, und eine Auslassöffnung, um das Entsorgungsmittel abzuführen, wobei es sich bei der Einlass- und Auslassöffnung um dieselbe Öffnung oder um zwei separate Öffnungen handeln kann. Die Aufnahmevorrichtung dieses Ausführungsbeispiels ist jedoch mit einem Trockenbindemittel und/oder einem Filtervlies versehen, um das Entsorgungsmittel, insbesondere ein Zwei- oder Mehr-Komponenten-Lacksystem, physikalisch zu binden.

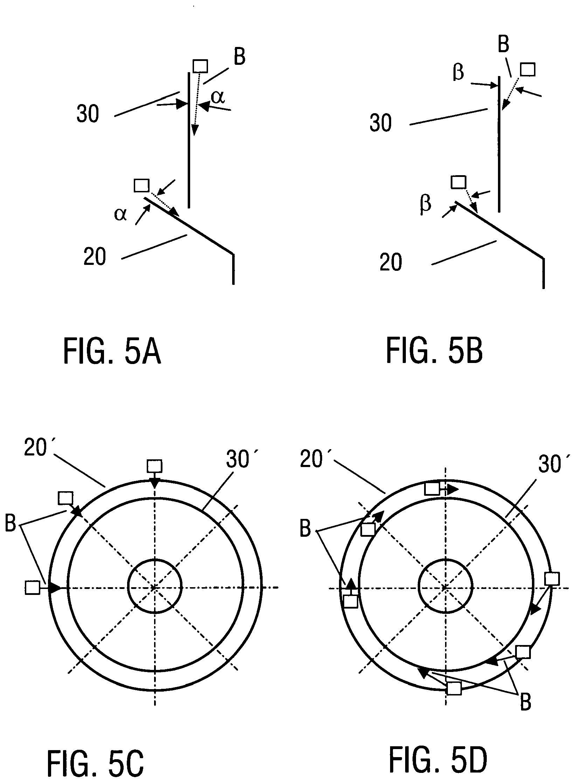

Die Figuren 5A-5D zeigen schematisch eine Vielzahl von beispielhaften Möglichkeiten, wie das Beaufschlagungsmittel B und/oder das Entsorgungsmittel E in die Aufnahmevorrichtung einzubringen ist.

Figur 5A zeigt eine schematische Schnittansicht des zweiten Körpers 20, des dritten Körpers 30 und beispielhaft zwei Beaufschlagungsrichtungen, die durch zwei Quadrate angedeutet sind. Die Beaufschlagungseinrichtungen sind bei diesem Ausführungsbeispiel so vorgesehen, dass das Beaufschlagungsmittel B im Wesentlichen parallel zu den mit Beaufschlagungsmitteln B zu beaufschlagenden Flächen der Aufnahmevorrichtung 1 zugeführt wird. Im Wesentlichen parallel umfasst Auftreffwinkel α von kleiner oder gleich ungefähr 10°.

Figur 5B zeigt eine schematische Schnittansicht des zweiten Körpers 20, des dritten Körpers 30 und beispielhaft zwei Beaufschlagungsrichtungen, die durch zwei Quadrate angedeutet sind. Die Beaufschlagungseinrichtungen sind bei diesem Ausführungsbeispiel so vorgesehen, dass das Beaufschlagungsmittel B schräg auf die mit Beaufschlagungsmittel B zu beaufschlagenden Flächen der Aufnahmevorrichtung 1 aufgebracht wird. Schräg umfasst Auftreffwinkel β von ungefähr 10°, größer als 10°, größer als 20°, größer als 45°, größer als 60° bis 90° und darüber hinaus.

Figur 5C zeigt eine schematische Draufsicht des zweiten Körpers 20', des dritten Körpers 30' und beispielhaft drei Beaufschlagungseinrichtungen, die durch drei Quadrate angedeutet sind. Die Beaufschlagungseinrichtungen sind bei diesem Ausführungsbeispiel so vorgesehen, dass das Beaufschlagungsmittel B im Wesentlichen ausgerichtet auf die Auslassöffnung zugeführt wird.

Figur 5D zeigt eine schematische Draufsicht des zweiten Körpers 20', des dritten Körpers 30' und beispielhaft drei Beaufschlagungseinrichtungen, die durch drei Quadrate angedeutet sind. Die Beaufschlagungseinrichtungen sind bei diesem Ausführungsbeispiel so vorgesehen, dass das Beaufschlagungsmittel B (und/oder das Entsorgungsmittel E) im Wesentlichen in Umfangsrichtung in die Aufnahmevorrichtung geführt wird (siehe die drei Beaufschlagungseinrichtungen links oben in Figur 5D) und/oder im Wesentlichen tangential auf die Außenfläche des dritten Körpers aufgebracht wird (siehe die drei Beaufschlagungseinrichtungen rechts unten in Figur 5D).

Die in den Figuren 5A bis 5D beschriebenen Möglichkeiten zur Zuführung des Beaufschlagungsmittels B und/oder des Entsorgungsmittels E in die Aufnahmevorrichtung können beliebig miteinander kombiniert werden.

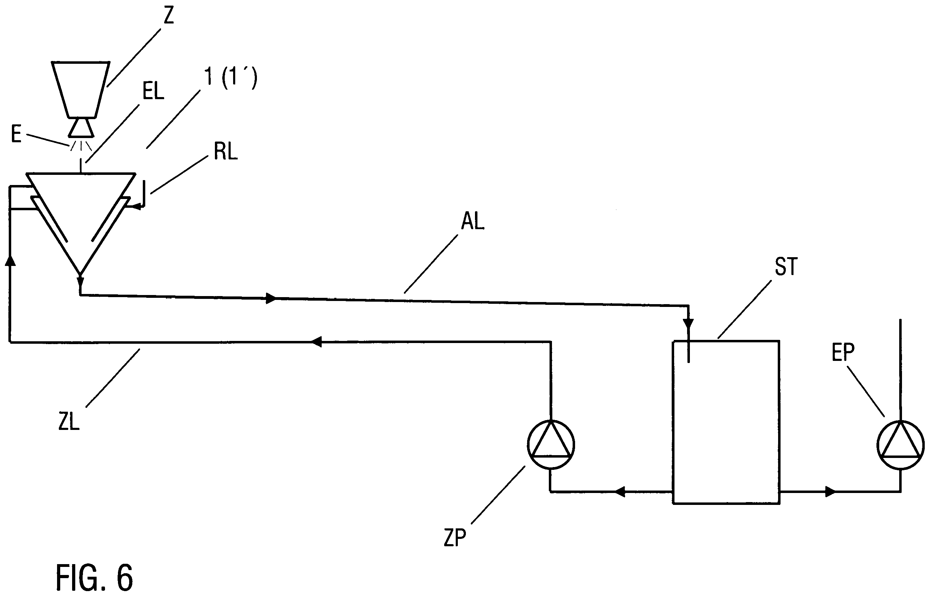

Figur 6 zeigt eine schematische Darstellung eines Entsorgungssystems, insbesondere für Entsorgungsmittel E aus Reinigungs- und/oder Spülprozessen eines Applikationsgeräts, vorzugsweise eines Zerstäubers Z und eines Farbwechslers und/ oder einer Rückführleitung RL.

Das Entsorgungssystem umfasst eine Aufnahmevorrichtung für Entsorgungsmittel, vorzugsweise eine Aufnahmevorrichtung 1 oder 1' wie vorstehend beschrieben, und eine Zirkulationsleitung ZL zum Zuführen von Beaufschlagungsmittel in die Aufnahmevorrichtung 1 (1'), um ein Ablagern von Entsorgungsmittel E insbesondere an oder in der Aufnahmevorrichtung 1 (1') zumindest zu verzögern, vorzugsweise im Wesentlichen zu verhindern. Das Bezugszeichen EL kennzeichnet eine Entlüftung der Aufnahmevorrichtung 1 (1'), über die z.B. Luftanteile des Entsorgungsmittels E entweichen können.

Ferner umfasst das Entsorgungssystem eine Abführleitung AL, die das aus der Aufnahmevorrichtung 1 (1') abgeführte Entsorgungsmittel E und/oder Beaufschlagungsmittel einem Sammeltank ST zuführt, in dem das Entsorgungsmittel E und/oder das Beaufschlagungsmittel zwischengelagert werden können. Die Abführleitung AL kann mit einem Gefälle von kleiner als ungefähr 1% (0,57°) angeordnet sein. Ferner verläuft die Abführleitung AL vorzugsweise im Wesentlichen parallel zu einer Lackierstraße und kann an eine oder mehrere Aufnahmevorrichtungen gekoppelt werden.

Das Entsorgungssystem weist auch eine Zirkulationspumpe ZP auf, um zumindest einen Teil von bereits aus der Aufnahmevorrichtung 1 (1') abgeführtem Entsorgungsmittel E und/oder Beaufschlagungsmittel von dem Sammeltank ST über die Zirkulationsleitung ZL wieder zu der Aufnahmevorrichtung 1 (1') zu führen.

Vorzugsweise ist das Entsorgungssystem, insbesondere die Abführleitung AL mit Zusatzflüssigkeit beaufschlagt. Beispielsweise kann die Abführleitung AL zu ungefähr 85% gefüllt sein mit einem Gemisch aus Zusatzflüssigkeit, Entsorgungsmittel E und Lösemittel. Das Gemisch besteht vorzugsweise zu einem Großteil aus Zusatzflüssigkeit, z.B. kann das Gemisch zu ungefähr 80% aus Zusatzflüssigkeit bestehen.

Sobald der Sammeltank ST voll ist, kann der Sammeltank ST entweder mit Hilfe einer Entsorgungspumpe EP in einen weiteren Sammeltank (nicht dargestellt) geführt werden oder in einen Transportcontainer entleert werden.

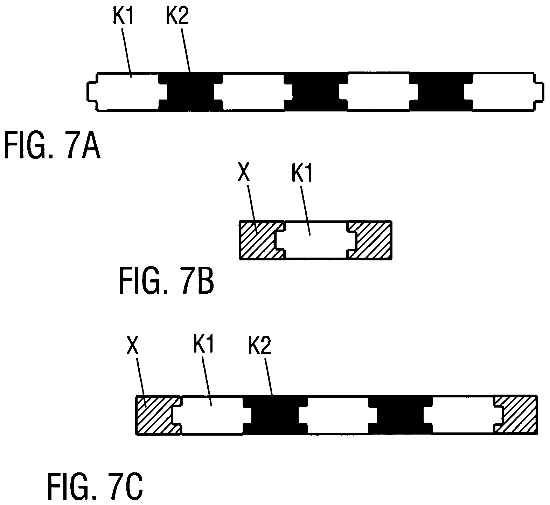

Bei den oben beschriebenen Ausführungsbeispielen kann ferner ein Blockierungsmittel eingesetzt werden. Der Einsatz eines Blockierungsmittels ist insbesondere von Vorteil, wenn das Entsorgungsmittel einen Zwei- oder Mehr-Komponenten-Lack umfasst. Das Blockierungsmittel wird dann eingesetzt, um ein Aushärten des Zwei- oder Mehr-Komponenten-Lacksystems zumindest zu verzögern, vorzugsweise im Wesentlichen zu verhindern, was ein Ablagern von Entsorgungsmittel an oder in der Aufnahmevorrichtung, an oder in Teilen des Entsorgungssystems und/oder an oder in anderen Teilen einer Beschichtungsanlage zumindest verzögert, vorzugsweise im Wesentlichen verhindert. Die Figuren 7A-7C beziehen sich auf ein Blockierungsmittel und eine Zusammensetzung. Insbesondere zeigen die Figuren 7b und 7C eine Zusammensetzung, die ein Blockierungsmittel und ein Zwei- oder Mehr-Komponenten-Lackssystem umfasst. Bei dem Zwei- oder Mehr-Komponenten-Lack kann es sich um einen herkömmlichen Zwei- oder Mehr-Komponenten-Lack handeln, der üblicherweise zur Beschichtung von Kraftfahrzeugkarosseriebauteilen eingesetzt wird.

Figur 7A zeigt einen Ausschnitt aus einer Polymerkette aus zwei Reaktivkomponenten K1 und K2, wobei K1 vorzugsweise eine Härter-Komponente kennzeichnet und K2 eine Lack-Komponente kennzeichnet.

Figur 7B zeigt schematisch ein Beispiel einer Reaktionsblockierung, wobei ein Blockierungsmittel X mit der Härter-Komponente K1 reagiert, um ein Aushärten zumindest zu verzögern, vorzugsweise im Wesentlichen zu verhindern.

Figur 7C zeigt schematisch ein Beispiel einer Reaktionsblockierung, wobei ein Blockierungsmittel X als Kettenstopper wirkt, um ein Aushärten zumindest zu verzögern, vorzugsweise im Wesentlichen zu verhindern.

Das Blockierungsmittel X ist vorzugsweise ein reaktiver, monofunktioneller Stoff, der mit mindestens einer Komponente eines Zwei- oder Mehr-Komponenten-Lacks, vorzugsweise mit der Härter-Komponente K1, reagiert, dabei aber aufgrund seiner Monofunktionalität nicht zu Polymerketten führt, sondern im Idealfall zu einem Molekül bzw. Oligomer aus einem Härter-Molekül und zwei Blockierungsmittel-Molekülen.

Üblicherweise startet mit dem Vermischen der Härter-Komponente K1 und der Lack-Komponente K2 deren Reaktion und das Aushärten beginnt. Bei Raumtemperatur ist die Reaktionsgeschwindigkeit relativ langsam, um die Prozess- bzw. Verarbeitungsfähigkeit (Topfzeit, Spülbarkeit) zu gewährleisten. Reagiert das Blockierungsmittel X mit einem Dimeren bzw. Oligomeren des Zwei- oder Mehr-Komponenten-Lacksystems, wird die polymere Kettenreaktion im Wesentlichen gestoppt. Die Ketten-Stopp-Reaktion hängt dabei insbesondere von der Reaktivität des Blockierungsmittels X ab und ist vorzugsweise schneller als die Reaktion der Lackkomponenten untereinander. Je kleiner das Blockierungsmittel-Molekül ist, desto größer ist dessen Beweglichkeit und desto größer ist im Allgemeinen auch seine Reaktivität. Umgekehrt gilt für die Lackkomponenten, dass sie auf Grund ihrer wesentlich größeren Molekülmasse unbeweglicher und damit meist reaktionsträger sind.

Wird das Zwei- oder Mehr-Komponenten-Lacksystem mit ausreichend Blockierungsmittel X beaufschlagt, bilden sich keine langen, im Wesentlichen unlöslichen Polymere, die zu Ablagerungen führen können, sondern kurzkettige Moleküle, die beispielsweise von dem vorzugsweise Lösemittel enthaltendem Beaufschlagungsmittel in Lösung gehalten und somit abgetragen werden können.

Als Blockierungsmittel X kommen alle monofunktionellen Moleküle in Betracht, die mit mindestens einer Komponente eines Zwei- oder Mehr-Komponenten-Lacks reagieren, um das Aushärten zumindest zu verzögern, vorzugsweise im Wesentlichen zu verhindern. Insbesondere kommen als Blockierungsmittel X in Betracht Amine oder Alkohole, vorzugsweise niedere Alkohole, wie z.B. Ethanol, Propanol, Butanol oder ihre Isomere, insofern es sich bei einer der Lack-Komponenten um ein Isocyanat handelt.

Ferner kommen als Blockierungsmittel X reaktive Substanzen in Betracht, z.B. Reaktionsverzögerer, beispielsweise in Form von organischen Säurechloriden, die das Aushärten zumindest verzögern, vorzugsweise stoppen.

Das Blockierungsmittel X ist vorzugsweise mit üblichem Lack, Lack-Spül-, Lack-Reinigungs- und/oder Lack-Lösemitteln mischbar. Wenn das Blockierungsmittel X nicht mit dem Lack-Spül-, Lack-Reinigungs- und/oder Lack-Lösemittel mischbar ist, kann ein Lösungsvermittler zugegeben werden.

Das Blockierungsmittel X wird nach dem Vermischen des Zwei- oder Mehr-Komponenten-Lacksystems zugegeben.

Das Blockierungsmittel X kann bei üblichem Lack eingesetzt werden, vorzugsweise einem üblichen Zwei- oder Mehr-Komponenten-Lack. Insbesondere kann das Blockierungsmittel mit üblichen Spül-, Reinigungs- und/oder Lösemitteln verwendet werden. Beispielsweise liegt der Anteil an Blockierungsmittel X bei zwischen 5-50%, vorzugsweise zwischen 10-30%. Das Blockierungsmittel X kann jedoch auch in reiner Form als Spül- und/oder Reinigungsmittel verwendet werden, d.h. dass das Spül- und/oder Reinigungsmittel zu im Wesentlichen 100% aus Blockierungsmittel besteht.

Insbesondere ist das Blockierungsmittel vorgesehen, um mit einer Härterkomponente des Zwei- oder Mehr-Komponenten-Lacksystems zu reagieren.

Die Zusammensetzung kann zusätzlich zu dem Zwei- oder Mehr-Komponenten-Lacksystem und dem Blockierungsmittel ferner ein Spül-, Reinigungs- und/oder Lösemittel und/oder einen Lösungsvermittler zur Vermischung des Blockierungsmittels mit dem Spül-, Reinigungs- und/oder Lösemittel umfassen.

Bei einem bevorzugten Ausführungsbeispiel ist ein Beschichtungsanlagenbauteil (z.B. die vorstehend beschriebene Aufnahmevorrichtung, ein Applikationsgerät, ein Zerstäuber, ein Farbwechsler, Leitungen, etc.) zumindest teilweise mit dem Blockierungsmittel X und/oder der Zusammensetzung, umfassend ein Zwei- oder Mehr-Komponenten-Lacksystem und das Blockierungsmittel, versehen (z.B. beschichtet und/oder befüllt und/oder durchströmt). Dadurch kann es zumindest verzögert, vorzugsweise im Wesentlichen verhindert werden, dass Zwei- oder Mehr-Komponenten-Lack an oder in dem Beschichtungsanlagenbauteil unerwünscht aushärtet und/oder sich unerwünscht ablagert.

Die Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1, 1': Aufnahmevorrichtung
- 11, 12: Einlassöffnung
- 13: Auslassöffnung
- 10, 10': Erster Körper
- 20, 20': Zweiter Körper
- 30, 30': Dritter Körper
- 40: Gitterrost
- 50, 50': Beaufschlagungseinrichtungen
- A-A: Achse
- AL: Abführleitung
- B: Beaufschlagungsmittel
- D1, D2, D3: Durchmesser vom ersten, zweiten, dritten Körper
- E: Entsorgungsmittel
- EL: Entlüftung
- EP: Entsorgungspumpe
- K1: Härter-Komponente
- K2: Lack-Komponente
- RL: Rückführleitung
- ST: Sammeltank
- X: Blockierungsmittel
- ZL: Zirkulationsleitung
- ZP: Zirkulationspumpe
- Z12: Zwischenraum erster/zweiter Körper
- Z13: Zwischenraum erster/dritter Körper
- Z23: Zwischenraum zweiter/dritter Körper
- α, β: Auftreffwinkel

## Patentansprüche

1. Verwendung eines Blockierungsmittels zur Reaktion mit zumindest einer Komponente eines Zwei- oder Mehr-Komponenten-Lacksystems, um ein Aushärten des Zwei- oder Mehr-Komponenten-Lacksystems in einem Applikationsgerät zumindest zu verzögern, wobei das Blockierungsmittel zur Durchströmung des Applikationsgeräts dient und/oder nach dem Vermischen des Zwei- oder Mehr-Komponenten-Lacksystems zugegeben wird.

2. Verwendung nach Anspruch 1, wobei zumindest eines von Folgenden als Blockierungsmittel eingesetzt wird:
a) Monofunktionelle Moleküle;
b) zumindest ein Amin;
c) zumindest ein Alkohol, bevorzugt ein niederer Alkohol;
c1) Ethanol;
c2) Propanol und/oder zumindest eines dessen Isomere;
c3) Butanol und/oder zumindest eines dessen Isomere;
d) eine reaktive Substanz;
d1) organisches Säurechlorid.

3. Verwendung nach einem der Ansprüche 1-2, wobei das Blockierungsmittel vorgesehen ist, um mit einer Härterkomponente des Zwei- oder Mehr-Komponenten-Lacksystems zu reagieren.

4. Verwendung nach einem der Ansprüche 1-3, wobei das Blockierungsmittel
a) einen Zerstäuber; und/oder
b) einen Glockenteller; und/oder
c) einen Mischer zum Mischen des Zwei- oder Mehr-Komponenten-Lacksystems; und/oder
d) ein Reinigungsgerät zum Reinigen eines Applikationsgeräts; und/oder
e) einen Farbwechsler; und/oder
f) eine Rückführleitung; und/oder
g) eine Aufnahmevorrichtung für Entsorgungsmittel; und/oder
h) eine Abführleitung zum Abführen von Entsorgungsmittel (E) von der Aufnahmevorrichtung; und/oder
i) eine Zirkulationsleitung zum Rückführen von bereits aus der Aufnahmevorrichtung abgeführtem Entsorgungsmittel (E) zu der Aufnahmevorrichtung
durchströmt und/oder beschichtet und/oder befüllt.

5. Verfahren für ein Applikationsgerät, wobei das Applikationsgerät von einem Blockierungsmittel durchströmt wird, um ein Aushärten eines Zwei- oder Mehr-Komponenten-Lacksystems an oder in dem Applikationsgerät zumindest zu verzögern.

6. Verfahren nach Anspruch 5, wobei das Blockierungsmittel
a) einen Applikationsroboter; und/oder
b) einen Zerstäuber; und/oder
c) einen Glockenteller; und/oder
d) einen Mischer zum Mischen des Zwei- oder Mehr-Komponenten-Lacksystems; und/oder
e) ein Reinigungsgerät zum Reinigen des Applikationsgeräts; und/oder
f) einen Farbwechsler; und/oder
g) eine Aufnahmevorrichtung für Entsorgungsmittel beschichtet und/oder befüllt und/oder durchströmt.

7. Verfahren nach einem der Ansprüche 5-6, wobei das Blockierungsmittel zumindest eines von Folgenden umfasst:
a) Monofunktionelle Moleküle;
b) zumindest ein Amin;
c) zumindest einen Alkohol, bevorzugt einen niederen Alkohol;
c1) Ethanol;
c2) Propanol und/oder zumindest eines dessen Isomere;
c3) Butanol und/oder zumindest eines dessen Isomere;
d) eine reaktive Substanz;
d1) organisches Säurechlorid.

8. Verfahren nach einem der Ansprüche 5-7, wobei das Blockierungsmittel vorgesehen ist, um mit einer Härter-Komponente des Zwei- oder Mehr-Komponenten-Lacksystems zu reagieren.

## Claims

1. Use of a blocking agent to react with at least one component of a two-component or more-component paint system in order to at least delay hardening of the two-component or more-component paint system in an application apparatus, wherein the blocking agent serves for flowing through the application apparatus and/or is added after the mixing of the two-component or more-component paint system.

2. The use according to Claim 1, wherein at least one of the following is used as the blocking agent:
a) monofunctional molecules;
b) at least one amine;
c) at least one alcohol, preferably a lower alcohol;
c1) ethanol;
c2) propanol and/or at least one isomer thereof;
c3) butanol and/or at least one isomer thereof;
d) a reactive substance;
d1) organic acid chloride.

3. The use according to any one of Claims 1-2, wherein the blocking agent is provided to react with a hardener component of the two-component or more-component paint system.

4. The use according to any one of Claims 1-3, wherein the blocking agent flows through and/or coats and/or fills
a) an atomizer; and/or
b) a bell cup; and/or
c) a mixer for mixing the two-component or more-component paint system; and/or
d) a cleaning apparatus for cleaning an application apparatus; and/or
e) a colour changer; and/or
f) a return line; and/or
g) a receiving device for disposal agent; and/or
h) a discharge line for discharging disposal agent (E) from the receiving device; and/or
i) a circulation line for returning disposal agent (E) already discharged from the receiving device to the receiving device.

5. A method for an application apparatus, wherein the application apparatus is flown through by a blocking agent, in order to at least delay hardening of a two-component or more-component paint system at or in the application apparatus.

6. The method according to Claim 5, wherein the blocking agent coats and/or fills and/or flows through
a) an application robot; and/or
b) an atomizer; and/or
c) a bell cup; and/or
d) a mixer for mixing the two-component or more-component paint system; and/or
e) a cleaning apparatus for cleaning an application apparatus; and/or
f) a colour changer; and/or
g) a receiving device for disposal agent.

7. The method according to any one of Claims 5-6, wherein the blocking agent comprises at least one of the following:
a) monofunctional molecules;
b) at least one amine;
c) at least one alcohol, preferably a lower alcohol;
c1) ethanol;
c2) propanol and/or at least one isomer thereof;
c3) butanol and/or at least one isomer thereof;
d) a reactive substance;
d1) organic acid chloride.

8. The method according to any one of Claims 5-7, wherein the blocking agent is provided to react with a hardener component of the two-component or more-component paint system.

## Revendications

1. Utilisation d'un moyen de blocage pour une réaction avec au moins un composant d'un système de peinture à deux composants ou plus, afin au moins de retarder un durcissement du système de peinture à deux composants ou plus dans un dispositif d'application, le moyen de blocage permettant la traversée du dispositif d'application et/ou étant ajouté après le mélange du système de peinture à deux composants ou plus.

2. Utilisation selon la revendication 1, au moins un des éléments suivants est utilisé comme moyen de blocage :
a) molécule monofonctionnelle;
b) au moins un amine ;
c) au moins un alcool, de préférence un alcool inférieur ;
c1)éthanol;
c2)propanol et/ou au moins un de ses isomères ;
c3)butanol et/ou au moins un de ses isomères ;
d) une substance réactive ;
d1)un chlorure d'acide organique.

3. Utilisation selon l'une des revendications 1 à 2, le moyen de blocage étant prévu pour réagir avec un composant de durcisseur du système de peinture à deux composants ou plus.

4. Utilisation selon l'une des revendications 1 à 3, le moyen de blocage traversant et/ou revêtant et/ou remplissant :
a) un pulvérisateur ; et/ou
b) un plateau à cloche ; et/ou
c) un mélangeur pour le mélange du système de peinture à deux composants ou plus ; et/ou
d) un appareil de nettoyage pour le nettoyage d'un dispositif d'application ; et/ou
e) un changeur de couleur ; et/ou
f) une conduite de retour ; et/ou
g) un dispositif de collecte pour les produits éliminés ; et/ou
h) une conduite d'évacuation pour l'évacuation des produits éliminés (E) du dispositif de collecte ; et/ou
i) une conduite de circulation pour le retour de produits éliminés (E), déjà évacués hors du dispositif de collecte, vers le dispositif de collecte.

5. Procédé pour un dispositif d'application, le dispositif d'application étant traversé par un moyen de blocage afin au moins de retarder un durcissement d'un système de peinture à deux composants ou plus sur ou dans le dispositif d'application.

6. Procédé selon la revendication 5, le moyen de blocage traversant et/ou revêtant et/ou remplissant :
a) un robot d'application ; et/ou
b) un pulvérisateur ; et/ou
c) un plateau à cloche ; et/ou
d) un mélangeur pour le mélange du système de peinture à deux composants ou plus ; et/ou
e) un appareil de nettoyage pour le nettoyage du dispositif d'application ; et/ou
f) un changeur de couleurs ; et/ou
g) un dispositif de collecte pour les produits éliminés.

7. Procédé selon l'une des revendications 5 à 6, le moyen de blocage comprenant au moins un des éléments suivants :
a) molécule monofonctionnelle;
b) au moins un amine ;
c) au moins un alcool, de préférence un alcool inférieur ;
c1)éthanol;
c2)propanol et/ou au moins un de ses isomères ;
c3)butanol et/ou au moins un de ses isomères ;
d) une substance réactive ;
d1)un chlorure d'acide organique.

8. Procédé selon l'une des revendications 5 à 7, le moyen de blocage étant prévu pour réagir avec un composant de durcisseur du système de peinture à deux composants ou plus.
